# EUROPEAN PATENT SPECIFICATION

(11) **EP 0 516 595 B1**
(45) Date of publication and mention of the grant of the patent: **15.01.1997**
(21) Application number: 92830272.8
(22) Date of filing: 28.05.1992
(51) Int. Cl.: B29C 57/08, B29B 13/02

(54) **Equipment for forming and cooling socket ends on pipes of thermoplastic material**
Vorrichtung zur Herstellung und Kühlung von thermoplastischen Rohrmuffen
Dispositif de formage et de refroidissement de manchons pour tubes thermoplastiques

(30) Priority: 31.05.1991 IT BO910188
(43) Date of publication of application: 02.12.1992
(73) Proprietor: S.I.C.A. SERRANDE INFISSI CARPENTERIA ATTREZZATURA S.p.A., I-48011 Alfonsine (Ravenna) (IT)
(72) Inventor: Savioli, Leopoldo, I-48011 Alfonsine (Ravenna) (IT)
(74) Representative: Lanzoni, Luciano

(56) References cited:
- EP-A- 0 081 883
- US-A- 4 266 926
- KUNSTSTOFFE vol. 70, no. 7, July 1980, MÜNCHEN pages 402 - 403; KLAUS STOECKHERT: 'FOLGEGERÄTE FÜR ROHREXTRUSIONSANLAGEN'
- PLASTICA vol. 31, no. 12, December 1978, ROTTERDAM page 371; J. J. M. CORMONT:
- 'VERVORMEN VAN PIJPEINDEN'

## Description

The present invention relates to equipment by means of which to form sockets on pipes of thermoplastic material, and to cool the sockets thus formed.

Conventionally, equipment of the type in question comprises a mechanically expanding mandrel over which the previously heated thermoplastic pipe is placed, and a pair of external clamps; thus, the mandrel and the clamps interact respectively with the internal and external surfaces of the part of the pipe to be formed into a socket.

In more recent designs of such forming equipment, two chambers are created between the clamps and the pipe, separated by a cylindrical casing, of which the innermost is pressurized and serves to shape the socket whilst the outermost admits a stream of cooling fluid flowing first through holes into the mandrel, and thereafter onto the outer surface of the pipe by way of the inner chamber. This second flow is obtained by shifting the casing from a position of tight association with special seals, in which the inner chamber is pressurized to form the socket, to a position in which the two chambers are connected and the external surface of the pipe is exposed to the cooling fluid.

Given the small volume of the inner chamber, the pressurization and depressurization intervals are relatively short and the corresponding operating cycles thus advantageously brief. Moreover, the formation of the socket on the pipe is faultless, with no marks left by the pressure seals as these are localized at points on the pipe where the material is not heated to a fully plastic state.

Nonetheless, it remains impossible when using such equipment to form the pipe to a desired profile and cool the formed profile at one and the same moment, thereby achieving a shorter operating cycle; indeed if the fluid coolant were to penetrate the inner chamber during the forming step, the resulting drop in pressure would prevent the socket from being formed to the desired shape with total precision.

Accordingly, the steps of the process have to be detached one from the other by reason of the very structure of the equipment, with the consequence that formation and cooling of the socket cannot be achieved simultaneously, and the combined duration of the single operations is inevitably prolonged.

An equipment of the type described in prior art portion of claim 1 is known from US 4,266,926. Said document shows a mechanical mandrel and a tubular casing which interact each other for forming socket ends on pipe by means of fluid pressure, which may be air, applied to the tubular casing for pressurizing a forming chamber of the equipment.

The equipment comprises also a socket ends cooling circuit which sprays water on the pipe.

More particularly, the gas pressure is maintained for a period od time sufficient to allow the plastic material in the pipe end to assume the shape of the mandrel. Then, the air pressure is relieved and cooling water is sprayed.

After a timing sufficiently for permanent set of the pipe bell to occur, the water spraying is stopped and drain channels are opened to drain water from the forming chamber.

Consequently the equipment performs first a forming phase by air and subsequently a cooling phase by water.

The document KUNSTSTOFFE (Vol.70 no.7, July 1980-pages 402-403), describes an equipment in which a mechanical mandrel and a tubular casing form in combination socked ends on pipe by means of water flow which pressurize a forming chamber to form and cool the socket end of the pipe.

The object of the present invention is to overcome the drawbacks mentioned above.

The stated object is fully realized in equipment, as characterized in the appended claims, by means of which the operations of forming and cooling a socket on thermoplastic pipe can be brought about simultaneously.

Among the advantages of equipment according to the invention is the fact that the two operations in question are carried out at one and the same time, thus significantly reducing the combined duration of the respective cyles and bringing clear benefits in terms of productivity.

The invention will now be described in detail, by way of example, with the aid of the accompanying drawings, in which:
- fig 1 illustrates the invention partly by way of a diagram and partly in lateral section, with certain parts omitted better to reveal others;
- fig 2 illustrates the operation of the invention diagrammatically and with particular reference to certain of its parts;
- fig 3 shows a detail of the invention as embodied in fig 1.

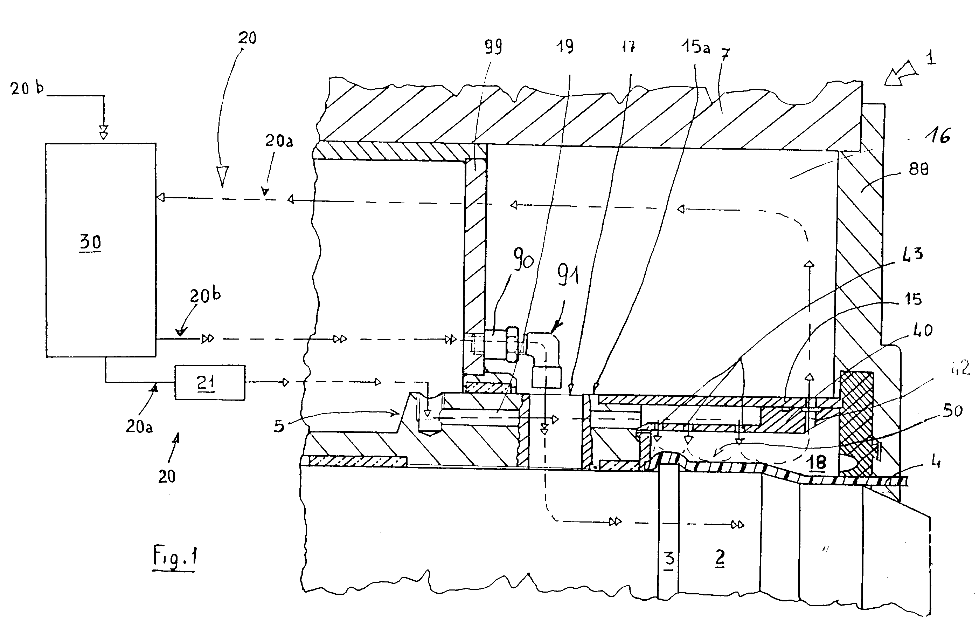

With reference to fig 1 of the drawings, 1 denotes equipment, comprising a mechanical mandrel 2, by means of which to form a socket on a thermoplastic pipe 4 and to cool the socket thus formed. Normally speaking, the mandrel 2 will be of expandable type, i.e. embodied with a ring of radially expanding sectors 3 by which an annular groove is formed in the thermoplastic pipe 4; in practice, the pipe is heated and then slid over the mandrel 2, splayed and formed ultimately into a permanent socket 50 at the end in question. Naturally, the mandrel 2 can be embodied without the expanding sectors 3 in the event that the socket 50 is to be fashioned without an annular groove. The pipe 4 slides along the mandrel 2 until impeded from further movement by an upsetting flange 5 ensheathing the mandrel 2.

The equipment 1 also comprises a tubular casing 15 rigidly, sealably and removably associated by way of its rear end 15a with the upsetting flange 5, of which the diameter is marginally greater than the maximum diameter of the thermoplastic pipe 4 and the length substantially the same as that of the socket 50 to be formed on the pipe. The casing 15 affords an inner chamber 18 encompassed externally by the casing 15 itself, internally by the pipe 4, and laterally, by bulkheads 88 at the forward end and the upsetting flange 5 at the rear end; the flange 5 also affords holes 17 connecting with the bore of the mandrel 2, and a single inlet duct 19 disposed with axis parallel to that of the mandrel and incorporated into the body of the flange 5 in the space between two successive holes 17, through which pressurized gaseous fluid is admitted to the inner chamber 18. The casing 15 also affords a second chamber encompassed externally by clamps 7, internally by the casing 15, and laterally by the same bulkheads 88 at front and further bulkheads 99 at rear. The socket 50 is thus formed into whatever selected shape through the action of the clamps 7, applied externally, and the expanding sectors 3 of the mechanical mandrel 2, applied internally.

The equipment 1 further comprises a circuit 20 by means of which to obtain a forced circulation of the gaseous fluid, with pressurized fluid directed into the casing 15 and emerging thereafter by way of an orifice denoted 42, and unpressurized fluid directed into the bore of the mandrel 2. This same circuit 20 comprises means 21 by which to cool at least the flow of pressurized fluid, which can thus be directed into the inner chamber 18 of the casing at low temperature and used advantageously both to form and to cool the thermoplastic material at one and the same time.

In the embodiment illustrated, a short length of tube 90 is anchored by one end to one of the rear bulkheads 99, of which the remaining end carries an elbow 91 directed at one of the holes 17 of the upsetting flange 5. It will be seen that there is no need for any sealing action between the elbow 91 and the hole 17, since the stream of gaseous fluid discharging from the elbow into the corresponding chamber 16 enters an enclosed environment of which the only outlet is provided by the holes 17; thus, the flow is taken up naturally from the elbow into the mandrel.

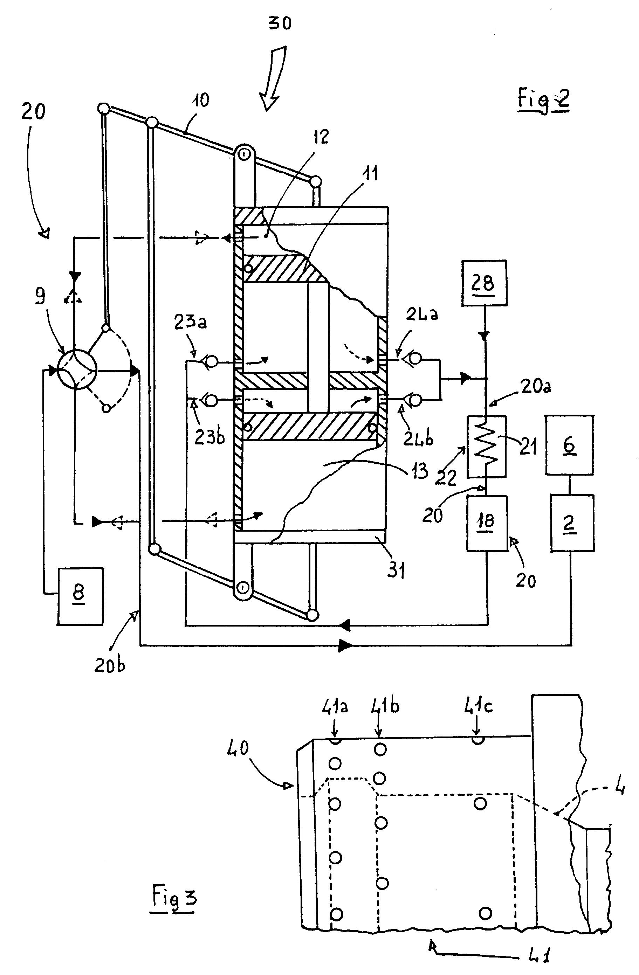

40 denotes a diffuser positioned internally of the inner chamber 18, between the single inlet duct 19 and the socket 50, of which the surface affords a plurality of passages 43 designed to ensure that the stream of fluid admitted by way of the duct 19 is concentrated on those areas of the socket 50 at which the temperature is highest. The diffuser 40 is rigidly associated with the tubular casing 15 and substantially cylindrical in shape, its axis coinciding with the common axis of the casing, the mandrel 2 and the socket 50. The passages 13 of the diffuser 40 consist in holes 41 (fig 3) distributed circumferentially in, a plurality of sets 41a, 41b, 41c... that will be variable in number according to the particular embodiment; three such sets 41a, 41b and 41c are shown in the example illustrated, of which the sets 41a, 41b nearer the hottest part of the socket 50 each comprise a number of holes 41 greater than that of the more distant set 41c. To ensure a uniform cooling effect over the hottest part of the socket 50, moreover, the holes 41 of the relative sets 41a, 41b are staggered at regular intervals.

The forced circulation circuit 20 comprises two distinct branches 20a and 20b, the first of which a closed loop carrying the pressurized fluid, and the second 20b an open vent carrying the unpressurized fluid. This particular feature of the equipment 1, shown schematically in fig 1, is illustrated in greater detail in fig 2. Firstly, it will be seen that both branches 20a and 20b are connected to the same forced circulation device 30, which comprises a circulating pump 31 embodied, in the example of fig 2, as a pressure intensifier; the closed loop branch 20a is established by directing the gaseous fluid from the pump 31 into the inner chamber 18 and back again to the inlet of the pump 31. Clearly enough, the use of the fluid as a coolant signifies that its temperature on entering the chamber 18 must be considerably lower than when returning, and accordingly, the necessary conditioning is brought about by a heat exchanger 22 immediately downstream of the pump 31. Given also that the pump 31 serves simply to circulate an already pressurized fluid, the inlet to the heat exchanger 22 is connected additionally to a compressor 28 which operates at the beginning of the forming cycle only, in order to raise pressure through the first branch 20a.

In the case of the second branch 20b, fluid flows from the low pressure outlet of the pump 31 to the bore of the mandrel 2, before venting ultimately to the atmosphere. It should be appreciated at this point, given that the circulating pump 31 consists in a pressure intensifier, that flow paths from the high and low pressure outlets are interchangeable as shown in fig 2. More exactly, the fluid reaches the pump 31 under pressure from a supply line 8 by way of a four-way directional valve 9 serving to control alternative paths illustrated in bold and phantom lines; the bold line corresponds to the ascent of a piston 11 mounted internally of the pump 31, and the phantom line to the descent of the piston. Inversion of the valve 9 is brought about by the movement of the piston 11, and accordingly, the piston 11 and the valve 9 are connected by an articulated linkage 10: on arrival of the piston 11 at the upper limit, as the result of fluid passing from the line 8 into a lower chamber 13 and being expelled from an upper chamber 12, the linkage 10 switches from the position illustrated in phantom line, reversing the configuration of the valve 9 in such a way as to connect the line 8 with the upper chamber 12 and thus bring about the descent of the piston 11. With a similar inversion occurring at each successive stroke limit, the piston continues to reciprocate and vent a stream of expanded (hence cold) fluid to the mandrel 2.

In reciprocating thus, the piston 11 interacts to advantage with the inlet valves 23a, 23b and outlet valves 24a, 24b of the circulating pump 31 which control the closed loop 20a; with the piston 11 ascending, the open valves 23a, 24b favour ascent, and with the piston descending, the remaining two valves 23b, 24a favour descent.

## Claims

1. Equipment for forming and cooling socket ends on pipes of thermoplastic material, comprising:
- a mechanical mandrel (2) with a ring of radially expanding sectors (3) by means of which to form an annular groove in a thermoplastic pipe (4) invested with a socket profile (50) by heating previously and forcing over the mandrel to the point at which one end of the pipe (4) locates against an upsetting flange (5) ensheathing the mandrel;
- a tubular casing (15), of which the rear end (15a) is associated rigidly, sealably and removably with the upsetting flange (5), the diameter marginally greater than the maximum diameter of the pipe (4) and the length substantially identical to that of the finished socket (50), and of which the internal enclosure affords an inner chamber (18) encompassed externally by the casing (15) itself, internally by the pipe (4) and laterally between bulkheads (88) at the forwardmost end, and an upsetting flange (5) at rear which affords a plurality of holes (17) connecting with the bore of the mandrel (2),
characterized
- in that it comprises and a single inlet duct (19) isolated from the holes (17) through which a gaseous fluid is directed under pressure into the chamber (18), a circuit (20) by means of which to obtain a forced circulation of the gaseous fluid consisting in a continuously pressurized flow internally of the tubular casing (15), and unpressurized flow internally of the mandrel (2); said circuit (20) having two distinct branches (20a, 20b), the first branche (20a) being a closed loop carrying the pressurized fluid from a forced circulation device (30) trough the single inlet duct (19) to chamber (18) inside of the tubular casing (15), and then back to the forced circulation device (30), trough an outlet orifice (42) in the casing (15), the second branch (20b) being an open vent, the same fluid but unpressurized being carried from the same forced circulation device 30 through the plurality of holes (17) into the mandrel (2) an then to the atmosphere, said circuit (20) further comprising means (21) by which to cool at least the pressurized flow of gaseous fluid to the end so that the thermoplastic pipe (4) can be invested with its final shape and cooled simultaneously.

2. Equipment as in claim 1, comprising a diffuser (40) positioned internally of the chamber (18) between the single inlet duct (19) and the socket (50) and affording passages (43) designed to ensure that a stream of fluid entering through the duct (19) is distributed and directed predominantly over the hottest areas of the forming socket (50).

3. Equipment as in claim 1, wherein means (21) by which to cool the pressurized flow of gaseous fluid comprise a heat exchanger (22).

4. Equipment as in claim 2, wherein the diffuser (40) is rigidly associated with the tubular casing (15).

5. Equipment as in claim 2, wherein the diffuser (40) is of cylindrical embodiment, disposed coaxial with the casing (15), the mandrel (2) and the socket (50) and presenting passages (43) distributed over the cylindrical surface.

6. Equipment as in claim 1, wherein both branches (20a, 20b) of the circuit are connected to a common circulation device (30).

7. Equipment as in claim 5, wherein the passages (43) are arranged circumferentially in a plurality of sets (41a, 41b, 41c...), of which the sets (41a, 41b...) nearer to the hottest part of the socket (50) comprise a respective number of passages (43) greater than that of the remaining sets (41c...).

8. Equipment as in claim 6, wherein the circulation device (30) comprises a circulating pump (31), of which a high pressure outlet and inlet are interconnected by the closed loop of the first branch (20a), and a low pressure outlet is connected to the second branch (20b) in such a way as enables exploitation of the relative vented flow to cool the bore of the mandrel (2).

9. Equipment as in claim 7, wherein the passages (43) of the sets (41a, 41b...) nearer the hottest part of the socket are staggered at regular intervals.

10. Equipment as in claim 8, wherein the circulating pump (31) is embodied as a pressure intensifier.

11. Equipment as in claim 5 or 7 or 9, wherein the passages (43) are holes (41).

## Patentansprüche

1. Vorrichtung zur Verformung und Kühlung von Muffenenden an Rohren aus thermoplastischem Material, enthaltend:
- einen mechanischen Dorn (2) mit einem Ring von radialen Expansionssektoren (3), durch die eine ringförmige Nut in ein thermoplastisches Rohr (4) einformbar ist, das mit einem Muffenprofil (50) versehen ist, wobei das Rohr nach vorherigem Erwärmen unter Kraft soweit auf den Dorn aufgeschoben wird, bis ein Ende des Rohres (4) gegen einen Stauchflansch (5) anliegt, denselben Dorn umringend;
- ein rohrförmiges Gehäuse (15), von dem das hintere Ende (15a) steif, dicht und abnehmbar mit dem Stauchflansch (5) verbunden ist, wobei der Durchmesser geringfügig größer als der maximale Durchmesser des Rohres (4) ist und die Länge im wesentlichen gleich zu derjenigen der fertigbearbeiteten Muffe (50) ist, und von dem der innere Bereich eine Innenkammer (18) aufweist, die außen durch das Gehäuse (15) selbst und innen durch das Rohr (4) und seitlich durch vordere Halbflansche (88) begrenzt wird, und ein hinterer Stauchflansch (5), der eine Mehrzahl von Öffnungen (17) aufweist, die mit dem Inneren des Dorns (2) verbunden sind, dadurch gekennzeichnet, daß sie eine einzelne Einlaßöffnung (19) enthält, die von den Öffnungen (17) isoliert ist, durch welche ein gasförmiges Fluid unter Druck in die Kammer (18) geleitet wird, und einen Kreislauf (20) enthält, über welchen eine erzwungene Zirkulation des gasförmigen Fluids erzeugt wird, bestehend aus einem kontinuierlichen, unter Druck stehenden Fluß innerhalb des rohrförmigen Gehäuses (15), und einem nicht unter Druck stehenden Fluß innerhalb des Dorns (2); der besagte Kreislauf (20) zwei getrennte Zweige (20a, 20b) aufweist, wobei der erste Zweig (20a) eine geschlossene Schleife bildet und das unter Druck stehende Fluid ausgehend von einer Vorrichtung (30), die die erzwungene Zirkulation erzeugt, über die einzelne Einlaßöffnung (19) zu der innerhalb des rohrförmigen Gehäuses (15) befindlichen Kammer (18) befördert, und dann zurück zu der Zirkulationsvorrichtung (30), über eine Auslaßöffnung (42) in das Gehäuse (15) zurückbefördert, wobei der zweite Zweig (20b) eine offene Abzugsöffnung bildet, und dasselbe Fluid, jedoch nicht unter Druck stehend, von derselben Zirkulationsvorrichtung (30) über die Mehrzahl von Öffnungen (17) in den Dorn (2) befördert wird und dann an die Atmosphäre gelangt, und der besagte Kreislauf (20) ferner Mittel (21) enthält, durch welche wenigstens der unter Druck stehende Fluß des gasförmigen Fluids am Ende gekühlt wird, so daß das thermoplastische Rohr (4) mit seiner endgültigen Form versehen und gleichzeitig gekühlt werden kann.

2. Vorrichtung nach Anspruch 1, wobei sie einen Diffusor (40) enthält, der innerhalb der Kammer (18) zwischen der einzelnen Einlaßöffnung (19) und der Muffe (50) angeordnet ist und Durchlässe (43) aufweist, die derart ausgeführt sind, um zu gewährleisten, daß ein Fluidstrom, der durch die Öffnung (19) eintritt, verteilt und vorwiegend über die heißesten Bereiche der geformten Muffe (50) gerichtet wird.

3. Vorrichtung nach Anspruch 1, wobei die Mittel (21), durch welche der unter Druck stehende Fluß des gasförmigen Fluids gekühlt wird, einen Wärmeaustauscher (22) enthalten.

4. Vorrichtung nach Anspruch 2, wobei der Diffusor (40) steif mit dem rohrförmigen Gehäuse (15) verbunden ist.

5. Vorrichtung nach Anspruch 2, wobei der Diffusor (40) eine zylindrische Form aufweist und koaxial zum Gehäuse (15), zum Dorn (2) und zur Muffe (50) angeordnet ist, und wobei er Durchlässe (43) aufweist, die über die zylindrische Oberfläche verteilt sind.

6. Vorrichtung nach Anspruch 1, wobei beide Zweige (20a, 20b) des Kreislaufes mit einer gemeinsamen Zirkulationsvorrichtung (30) verbunden sind.

7. Vorrichtung nach Anspruch 5, wobei die Durchlässe (43) umfangsförmig in einer Mehrzahl von Gruppen (41a, 41b, 41c...) angeordnet sind, von denen die Gruppen (41a, 41b...), die näher zu dem heißesten Teil der Muffe (50) liegen, eine jeweilige Anzahl von Durchlässen (43) enthalten, die größer ist als diejenige der verbleibenden Gruppen (41c...).

8. Vorrichtung nach Anspruch 6, wobei die Zirkulationsvorrichtung (30) eine Umlaufpumpe (31) enthält, von welcher ein Hochdruckauslaß und -einlaß durch die geschlossene Schleife des ersten Zweiges (20a) miteinander verbunden sind, und ein Niederdruckauslaß mit dem zweiten Zweig (20b) derart verbunden ist, daß eine Ausnutzung des jeweiligen abziehenden Flusses ermöglicht wird, um das Innere des Dorns (2) zu kühlen.

9. Vorrichtung nach Anspruch 7, wobei die Durchlässe (43) der Gruppen (41a, 41b...), die naher am heißesten Teil der Muffe liegen, in regelmäßigen Intervallen gestaffelt angeordnet sind.

10. Vorrichtung nach Anspruch 8, wobei die Umlaufpumpe (31) als ein Druckverstärker ausgebildet ist.

11. Vorrichtung nach Anspruch 5 oder 7 oder 9, wobei die Durchlässe (43) Öffnungen (41) sind.

## Revendications

1. Equipement destiné à former et à refroidir des manchons terminaux sur des tuyaux réalisés dans un matériau thermoplastique, comprenant :
- un mandrin mécanique (2) avec un cercle de secteurs se développant radialement (3) au moyen duquel il est possible de former une cannelure annulaire sur a tuyau thermoplastique (4) présentant un manchon (50) en préchauffant et en exerçant une force sur le mandrin jusqu'à ce que l'une des extrémités du tuyau (4) vienne se placer contre un bourrelet renversé (5) recouvrant le mandrin;
- un boîtier tubulaire (15), dont l'extrémité arrière (15a) est solidaire, de façon étanche et amovible, du bourrelet renversé (5), le diamètre légèrement plus grand que le diamètre maximum du tuyau (4) et la longueur essentiellement égale à celle du manchon terminal (50), et dont l'espace intérieur présente une chambre intérieure (18) définie extérieurement par le boîtier (15) lui-même, intérieurement par le tuyau (4) et latéralement délimitée entre des cloisons étanches (88) au niveau de l'extrémité la plus avancée, et par un bourrelet renversé (5) à l'arrière présentant une pluralité de trous (17) la reliant au trou du mandrin (2),
caractérisé
- en ce qu'il comprend un conduit d'arrivée simple (19) isolé des trous (17) à travers lequel un fluide gazeux sous pression est dirigé dans la chambre (18), et un circuit (20) au moyen duquel il est possible d'obtenir une circulation forcée du fluide gazeux, consistant en un flux pressurisé de façon continue à l'intérieur du boîtier tubulaire (15), et en un flux non-pressurisé à l'intérieur du mandrin (2); ledit circuit (20) ayant deux branches distinctes (20a, 20b), la première branche (20a) étant une boucle fermée amenant le fluide pressurisé arrivant d'un dispositif de circulation forcée (30) dans le conduit d'arrivée simple (19) pour aboutir dans la chambre (18) à l'intérieur du boîtier tubulaire (15), ce fluide pressurisé retournant ensuite dans le dispositif de circulation forcée (30) en passant à travers un orifice de sortie (42) aménagé dans le boîtier (15), la deuxième branche (20b) étant un évent ouvert, le même fluide, non-pressurisé cette fois, arrivant du même dispositif de circulation forcée (30) et passant dans le mandrin (2) à travers la pluralité de trous (17) pour ensuite sortir dans l'atmosphère, ledit circuit (20) comprenant en outre des moyens (21) destinés à refroidir au moins le flux pressurisé de fluide gazeux à la fin, de façon à ce que le tuyau thermoplastique (4) puisse prendre sa forme finale et être refroidi en même temps.

2. Equipement selon la revendication 1, comprenant un diffuseur (40) placé à l'intérieur de la chambre (18) entre le conduit d'arrivée simple (19) et le manchon (50) et présentant des passages (43) destinés à répartir et à diriger le courant de fluide entrant par le conduit (19) principalement sur les zones les plus chaudes du manchon en formation (50).

3. Equipement selon la revendication 1, dans lequel les moyens (21) destinés à refroidir le flux pressurisé de fluide gazeux comprennent un échangeur de chaleur (22).

4. Equipement selon la revendication 2, dans lequel le diffuseur (40) est solidaire du boîtier tubulaire (15).

5. Equipement selon la revendication 2, dans lequel le diffuseur (40), de forme cylindrique, est positionné coaxialement au boîtier (15), au mandrin (2) et au manchon (50) et présente des passages (43) répartis sur la surface cylindrique.

6. Equipement selon la revendication 1, dans lequel les deux branches (20a, 20b) du circuit sont reliées à un même dispositif de circulation (30).

7. Equipement selon la revendication 5, dans lequel les passages (43) sont disposés sur une circonférence formée d'une pluralité d'ensembles (41a, 41b, 41c...), dont les ensembles (41a, 41b...) les plus proches de la partie la plus chaude du manchon (50) présentent un nombre respectif de passages (43) plus élevé que les autres ensembles restants (41c...)

8. Equipement selon la revendication 6, dans lequel le dispositif de circulation (30) comprend une pompe de circulation (31), dont une sortie et une entrée à haute pression sont reliées entre elles par l'intermédiaire de la boucle fermée de la première branche (20a), une sortie à basse pression étant reliée à la deuxième branche (20b) de façon à ce que le flux ventilé correspondant puisse refroidir le trou du mandrin (2).

9. Equipement selon la revendication 7, dans lequel les passages (43) des ensembles (41a, 41b...) les plus proches de la partie la plus chaude du manchon sont répartis à intervalles réguliers.

10. Equipement selon la revendication 8, dans lequel la pompe de circulation (31) est en fait un multiplicateur de pression.

11. Equipement selon les revendications 5, 7 ou 9, dans lequel les passages (43) sont en fait des trous (41).
